# FASCICULE DE BREVET EUROPEEN

(11) **EP 1 792 447 B1**
(45) Date de publication et mention de la délivrance du brevet: **27.05.2009**
(21) Numéro de dépôt: 05802641.0
(22) Date de dépôt: 12.09.2005
(51) Int. Cl.: H04L 12/56, H04W 72/10

(54) **PROCEDE DE PREEMPTION POUR LA GESTION DES RESSOURCES RADIO DANS UN RESEAU DE COMMUNICATION MOBILE**
VERFAHREN FÜR PRÄEMPTIVES VERWALTEN VON FUNKBETRIEBSMITTELN IN EINEM MOBILKOMMUNIKATIONSNETZ
METHOD FOR PRE-EMPTIVELY MANAGING RADIO RESOURCES IN A MOBILE COMMUNICATIONS NETWORK

(30) Priorité: 22.09.2004 FR 0410030
(43) Date de publication de la demande: 06.06.2007
(73) Titulaire: FRANCE TELECOM, 75015 Paris (FR)
(72) Inventeur: BEZIOT, Nathalie, F-92350 Le Plessis Robinson (FR); JIMENEZ ALDAMA, Borja, 75015 Paris (FR); AMMI, Lionel, F-38300 Chateauvillain (FR)
(74) Mandataire: Desormiere, Pierre-Louis
(86) Numéro de dépôt international: PCT/FR2005/002257
(87) Numéro de publication internationale: WO 2006/032749

(56) Documents cités:
- EP-A- 0 714 192
- US-A1- 2003 125 034
- US-B1- 6 421 345
- "3rd generation partneship project; Technical specification group radio access network; UTRAN Iu interface RANAP signalling (Release 6) 3GPP TS 25.413 v6.1.0"[Online] mars 2004 (2004-03), pages 1-28, XP002323180 Extrait de l'Internet: URL:ww.3gpp.org> [extrait le 2005-04-04]

## Description

L'invention concerne, de manière générale, le domaine des télécommunications et se rapporte plus particulièrement à un procédé de gestion des ressources radio au niveau du réseau d'accès dans un réseau de communication mobile en mode paquet.

Le procédé selon l'invention est prévu pour s'appliquer aux réseaux mobiles utilisant la technologie GPRS ou UMTS, normalisées dans le cadre de la norme 3GPP. Dans un souci de ne pas surcharger la description, un glossaire comprenant la définition de l'ensemble des acronymes utilisés est prévu à la fin de la description, où le lecteur pourra utilement se reporter.

La norme UMTS spécifie un nouveau service support de transmission de données en mode paquet et permet d'offrir aux abonnés d'un opérateur mobile entre autres un accès à des services basés sur IP (messagerie électronique, téléchargement de fichiers, consultation de sites Web ou WAP). Des données (transmises dans des paquets IP) peuvent donc être échangées entre des serveurs appartenant à un réseau extérieur au réseau UMTS, typiquement le réseau Internet, et le téléphone mobile. A l'heure actuelle, l'UMTS est phasé en différentes versions, encore appelées "releases" selon la terminologie anglo-saxonne, et notamment la version dénommée Release 99, à laquelle la description qui va suivre fait plus particulièrement référence.

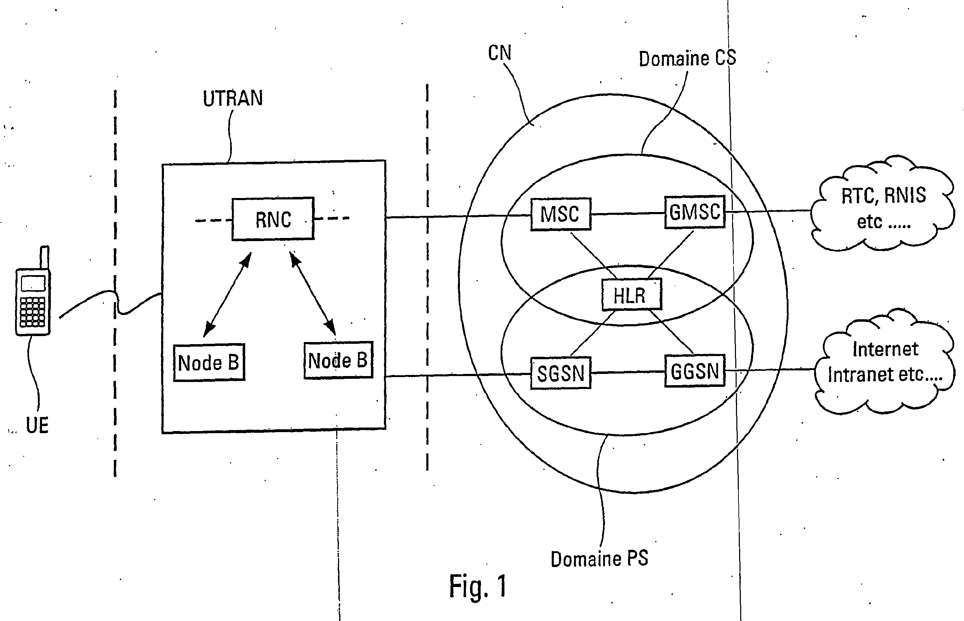

En terme d'architecture, le réseau UMTS est divisible en deux sous-réseaux, le réseau coeur CN et le réseau d'accès radio, aussi appelé UTRAN, tels que représentés à la figure 1.

Le réseau d'accès inclut une pluralité de stations de base radio Node B, prévues pour communiquer avec des équipements utilisateurs UE à travers une interface radio utilisant des ressources radio allouées par un noeud de gestion des ressources radio RNC. L'architecture hiérarchique, dans laquelle une entité contrôle plusieurs entités de niveau inférieur est identique au réseau d'accès radio du GSM. Le contrôleur de réseau radio RNC y tient la place du contrôleur de station de base (BSC) du GSM. Toutefois, les technologies radio employées pour transporter les informations sont différentes.

Le réseau coeur CN UMTS comprend quant à lui deux domaines distincts : le domaine circuit CS, qui comprend tous les services liés à la téléphonie, et le domaine paquet PS qui comprend tous les services liés à la commutation de paquets.

Au niveau du réseau coeur, on retrouve le HLR qui est une base de données commune aux deux domaines, dans laquelle sont stockées les informations relatives à chaque abonné de l'opérateur du réseau : le numéro d'appel de l'abonné, l'identité du mobile ainsi que les informations de l'abonnement. Le HLR contient également entre autres, les informations de qualité de service liées aux abonnés et aux services, qui seront définies plus loin dans la description. Ainsi, c'est à partir de cette base de données que s'effectue la gestion des abonnés mobiles au sein du réseau.

Le réseau coeur héberge également les commutateurs de circuits MSC et les commutateurs de paquets SGSN. Ces noeuds de service du réseau coeur assurent la gestion du lien de communication avec le réseau d'accès. Ils stockent le profil de l'abonné issu du HLR et effectuent un contrôle des ressources réseaux demandées par l'abonné.

Au niveau du domaine paquet, le SGSN est associé avec un autre noeud de service, le GGSN, qui joue plus particulièrement le rôle de passerelle vers les réseaux à commutation de paquets extérieurs (Internet, etc....). Le réseau coeur UMTS, en ce qui concerne le domaine paquet, est donc interconnecté avec l'extérieur via une passerelle, le noeud de service GGSN, qui contient les informations de routage permettant au mobile de communiquer avec un réseau externe, notamment le réseau Internet, tout en assurant la sécurité. Pour pouvoir envoyer les informations au mobile, le GGSN utilise alors l'autre noeud de service, le SGSN, qui gère la mobilité au niveau du réseau coeur, l'authentification et le chiffrement. Ces éléments de réseau intègrent des fonctions de routeur IP et constituent un réseau de type réseau IP.

Au niveau du domaine circuit, et de la même façon qu'expliqué en relation avec le domaine paquet, le MSC est associé avec un autre noeud de service, le GMSC, servant de passerelle vers des réseaux fixes de type RNC, RNIS, etc....

En Release 99, tous les services UMTS sont supportés par quatre classes de trafic normalisées comme suit : "Conversational", "Streaming", "Interactive" et "Background".

Les classes "Conversational" et "Streaming" sont principalement prévues pour transporter des flux temps réel comme de la voix ou de la vidéo. Toutefois, pour la classe "Streaming", correspondant à une utilisation du type un utilisateur regardant (ou écoutant) un flux vidéo (ou audio) temps réel, la contrainte sur les délais de transfert de données est plus faible que pour la classe "Conversational".

Les classes "Interactive" et "Background" correspondant à des services non temps réel sont quant à elles prévues pour être utilisées dans le cadre d'applications Internet traditionnelles telles que la navigation, le courrier électronique, les applications FTP. Ces dernières classes étant non temps réel, elles offrent de meilleures performances en taux d'erreurs grâce à des procédés de retransmission et de codage.

Le facteur distinctif principal entre ces classes est en fait la sensibilité aux délais. En effet, la classe de trafic "Conversational" sera très sensible aux délais tandis que la classe de trafic "Background" ne le sera pas du tout

La gestion de la répartition des ressources, et plus particulièrement des ressources radio, dans le réseau d'accès nécessite la prise en compte des paramètres de qualité de service QoS associés à une demande de service.

Les paramètres de QoS du service support UMTS décrivent ainsi le service rendu par le réseau UMTS à l'utilisateur du service support UMTS. Le profil QoS, formé par un ensemble de paramètres de QoS, spécifie ce service. Ce sont donc des paramètres normalisés permettant de définir les caractéristiques principales d'un flux de données sur le réseau, notamment en terme de débit, de type de trafic, de priorité, etc... Ces données sont stockées dans le profil de l'abonné dans le HLR et transmises, grâce à différentes procédures, aux entités suivantes: SGSN et MSC.

Le profil QoS d'un abonné UMTS correspond en fait à la meilleure QoS que l'abonné peut demander. Le profil QoS peut aussi correspondre à un profil par défaut configuré par l'opérateur.

Parmi ces paramètres de QoS qui sont spécifiés dans un profil QoS, on trouve principalement :
- "Allocation Retention Priority" (ARP) : ce paramètre de QoS permet d'effectuer une priorisation du trafic entre plusieurs abonnés pour l'allocation et la préemption des services supports UMTS. Un paramètre de ce type est spécifié respectivement pour chaque domaine : le domaine paquet et le domaine circuit.
- "Traffic Class": ce paramètre de QoS indique la priorité liée au type de service. Comme on l'a vu, en Release 99, tous les services sont supportés par quatre classes de trafic. Aussi, ce paramètre de QoS peut prendre les valeurs "Conversational" (correspondant à un niveau haute priorité, puisque l'exigence de temps réel est très importante), "Streaming", "Interactive" et "Background" (basse priorité).
- "Traffic Handling Priority" (THP): ce paramètre de QoS permet de préciser le niveau de priorité pour la classe de trafic "Interactive". Ce paramètre peut prendre trois valeurs et permet ainsi de prioriser les profils de type « interactif » les uns par rapport aux autres.

Parmi ces paramètres, on peut encore citer, à titre informatif, car non utilisés dans le cadre de la présente invention :
- "Transfer delay": ce paramètre de QoS donne le délai maximum lors du transfert d'un paquet. Il est utilisé pour les services temps réel seulement.
- "Guaranteed bit rate": ce paramètre de QoS indique le débit garanti lors du transfert d'un paquet. Il est utilisé pour les services temps réel seulement.
- "Maximum bit rate": ce paramètre de QoS indique le débit maximum.

L'ensemble des paramètres de QoS précités sont définis dans le cadre de la norme de télécommunication 3GPP. Toutefois, leur utilisation n'est pas normalisée.

En UMTS Release 99, au niveau du HLR, la norme prévoit la possibilité d'avoir un niveau de priorité dans les données d'abonné pour des services paquet et circuit. C'est le paramètre « Allocation Retention Priority » (ARP) qui est utilisé à cet effet. Ce paramètre est renseigné au niveau du HLR dans le réseau coeur pour chaque contexte PDP souscrit pour le domaine paquet ou par abonné pour le domaine circuit.

Le paramètre ARP permet donc de définir une priorité entre les abonnés pour l'allocation/conservation des ressources radio. Le paramètre ARP est utilisé dans le MSC, le SGSN, le GGSN et l'UTRAN pour donner une priorité à une demande de service d'un abonné et peut prendre trois valeurs dans le réseau coeur, respectivement : priorité 1, priorité 2 et priorité 3, la priorité 3 étant la plus faible.

Le paramètre ARP est envoyé au RNC de l'UTRAN sous forme de quatre sous-paramètres, pour associer un niveau de priorité à une communication correspondant à une demande de service d'un abonné. Ce paramètre est donc transformé en quatre sous-paramètres au niveau du réseau coeur pour être envoyé au RNC de l'UTRAN : "Priority Level", "Pre-emption Capability", "Pre-emption Vulnerability" et "Queuing allowed", dont les valeurs découlent du paramètre ARP du réseau coeur. Ces quatre sous-paramètres sont définis plus précisément dans la partie TS 25.413 de la norme 3GPP.

A partir des paramètres de priorité envoyés par le réseau coeur CN, l'UTRAN doit être capable de répartir l'intégralité de ses ressources (à savoir les ressources radio, les ressources de transport et la capacité de traitement) entre les différents utilisateurs du système.

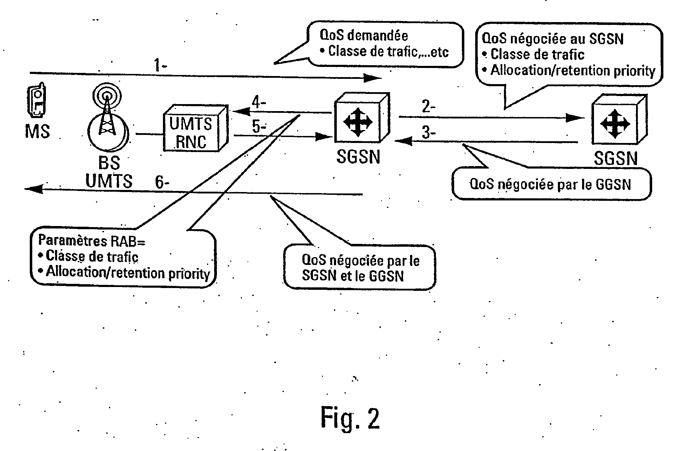

Une procédure d'activation d'un contexte PDP est décrite en référence à la figure 2. Elle permet à un terminal mobile MS de demander la mémorisation d'un contexte PDP dans le SGSN et GGSN et ainsi de réserver des ressources dans le réseau coeur pour l'exécution du service souhaité par l'abonné. Lors de l'activation d'un contexte PDP, les différents noeuds du réseau UMTS reçoivent les informations de qualité de service liées au contexte PDP demandé et à la souscription de l'abonné, en particulier la classe de trafic et la priorité de l'abonné, définie par le paramètre ARP.

L'information correspondant à la priorité de l'abonné, c'est-à-dire le paramètre ARP contenu dans les données définissant les contextes PDP souscrits par l'abonné, est transmise au SGSN lors de la mise à jour de la localisation de l'abonné. Cette information est ensuite transmise au GGSN lors de l'activation d'un contexte PDP par l'abonné, puis au RNC sous la forme des quatre sous-paramètres définis plus haut.

La procédure d'activation d'un contexte PDP a donc lieu lorsque l'abonné souhaite envoyer ou recevoir des données sur le réseau pour l'exécution d'un service auquel il a souscrit et est déclenchée à l'initiative de l'abonné mobile, permettant ainsi au terminal d'être connu du noeud de service GGSN qui réalise l'interconnexion avec le réseau externe demandé par l'abonné. A l'issue de cette procédure d'activation d'un contexte PDP, le profil de qualité de service correspondant est donc échangé entre les différents noeuds du réseau et la transmission de données entre le réseau UMTS et le réseau externe correspondant au service demandé par l'abonné peut alors débuter.

Dans une première étape, le terminal mobile MS demande l'activation d'un contexte PDP à son SGSN d'attache en précisant la QoS souhaitée. Le SGSN peut modifier la QoS demandée suivant les données de souscription et d'autres paramètres.

Dans des deuxième et troisième étapes, le SGSN relaie la demande au GGSN avec modification éventuelle des paramètres de QoS. On parle alors de QoS négociée. Le GGSN peut alors modifier de nouveau la QoS et la renvoie au SGSN.

Dans des étapes 4 et 5, le SGSN demande au RNC d'allouer les ressources radio nécessaires à un canal de communication en décrivant la QoS négociée sous forme d'une requête dite de service support d'accès radio RAB, comprenant un ensemble de paramètres de qualité de service appelés paramètres RAB dans la norme, qui comprennent notamment la classe de trafic et les quatre sous-paramètres issus du paramètre ARP du réseau coeur. Les paramètres RAB sont définis dans la section 9.2.1.3 de la norme 3GPP TS 25.413 v4.0.0.

Le RNC prend en compte la demande et, à partir des attributs du RAB, dimensionne et alloue les ressources radio nécessaires au canal de communication prévu pour le support de cette demande de service. Il vérifie si les ressources nécessaires sont disponibles et, si ce n'est pas le cas, il doit gérer la pénurie de ressources en fonction des paramètres de qualité de service associés aux canaux de communication déjà actifs et des paramètres de la nouvelle demande. Le RNC peut alors accepter ou refuser le canal de communication demandé.

Dans une sixième étape, le SGSN accepte la demande du mobile en lui renvoyant la qualité de service qu'il a obtenue sur le réseau.

Au niveau du domaine circuit, prenons l'exemple d'une demande d'appel sortant de type visiophonie. Dans une première étape, le mobile envoie sa demande de service au réseau coeur visant à obtenir un canal de communication avec la qualité de servie souhaitée. Les caractéristiques de QoS demandée sont contenues dans le champ concernant les capacités du réseau support (Bearer Capability selon la terminologie anglo-saxonne). Ce dernier précise le débit, le type de connexion souhaitée... Dans une deuxième étape, la demande est relayée vers le réseau fixe, type RNIS.

Enfin, le réseau coeur envoie sa demande d'allocation de ressources radio correspondante en décrivant comme expliqué plus haut la demande de service sous forme de paramètres RAB. Le RNC effectue un calcul des ressources radio nécessaires à allouer au canal de communication pour le support de cette demande de service. Il vérifie si ces ressources sont disponibles et, si ce n'est pas le cas, il doit gérer la pénurie de ressources en fonction des paramètres de qualité de service associés aux canaux de communication déjà actifs et des paramètres de la nouvelle demande. Le RNC peut alors accepter ou rejeter le canal de communication demandé.

Une contrainte importante à prendre en compte tient en ce que l'UTRAN doit être capable de répartir l'intégralité de ses ressources (pouvant être décrites par exemple par les ressources radio -interface Uu-, les ressources de transport - interface Iu, Iub et Iur-, et la capacité de traitement) entre les différents utilisateurs du système à partir des paramètres de qualité de service envoyés par le CN. Pour cela, une procédure de préemption, prévue par la norme, peut être mise en oeuvre pour faciliter l'accès aux ressources pour des utilisateurs ou des services considérés par l'opérateur du réseau comme prioritaires lorsque les ressources ne sont pas disponibles pour répondre à la QoS requise.

Lors de la demande d'allocation de ressources, il existe toujours un risque que les ressources demandées soient partiellement ou totalement indisponibles. Le contrôle d'admission localisé dans l'UTRAN peut détecter le manque de ressources gérées par le réseau d'accès. Ces ressources peuvent par exemple être caractérisées selon :
- la puissance, autant dans le sens montant que descendant,
- les codes, principalement dans le sens descendant,
- la capacité de traitement, correspondant aux ressources matérielles dans les différents équipements qui composent le réseau d'accès,
- la capacité de transmission sur le réseau de transport, c'est-à-dire les ressources allouées sur les différentes connexions physiques qui relient les différents équipements qui forment le réseau d'accès.

Le système doit veiller à une allocation/utilisation optimale des ressources au niveau de l'UTRAN entre tous les abonnés ayant le droit à accéder aux services proposés par l'opérateur. La norme propose une différentiation du traitement des abonnés en fonction de leur priorité, définie par le type d'abonnement souscrit avec l'opérateur du réseau, basée sur une procédure de pré-emption.

La procédure de préemption se traduit concrètement par la mise en oeuvre d'algorithmes permettant une diminution des ressources allouées à un service donné de sorte à disposer de ressources suffisantes pour répondre à une demande considérée comme prioritaire.

Or, les références à des procédures de préemption des ressources dans l'UTRAN présentes dans la norme 3GPP sont extrêmement succinctes et, pour l'essentiel, définissent simplement la règle suivante selon laquelle l'UTRAN peut uniquement mettre en oeuvre des mécanismes permettant de préempter les ressources des RABs avec une priorité plus faible, dans un ordre de priorité ascendant. Cependant, les critères pour affecter un niveau de priorité à un RAB par rapport à un autre RAB pour l'accès aux ressources ne sont pas décrits dans la norme.

La manière de prioriser l'accès aux ressources dans l'UTRAN, ainsi que l'utilisation des paramètres de priorité envoyés par le CN et qui font partie des paramètres RAB (c'est-à-dire les paramètres du groupe « Allocation Retention Priority ») sont donc dépendantes de l'implémentation choisie par les constructeurs de réseau.

Pourtant, la notion de pré-emption est très importante pour les opérateurs UMTS, puisqu'elle permet de gérer des classes d'abonnés et de définir une stratégie d'accès aux ressources radio. De plus, à partir du moment où la préemption devient possible sur un réseau, aucun mécanisme n'est prévu dans la norme pour définir quelles ressources vont être pré-emptées, à quel utilisateur et combien.

Le document US2003/0125034 A1 décrit un système de téléphonie mobile dans lequel lorsqu'un utilisateur requiert une nouvelle connexion, si la capacité libre n'est pas suffisante pour le débit de communication requis, le système vérifie si les terminaux ayant une priorité inférieure ne dépassent pas la bande qui leur est réservée. Si tel est le cas, le système met fin à ces connexions. Sinon, la nouvelle connexion est refusée.

Dans ce contexte, la présente invention a pour but de pallier les défauts mentionnés ci-dessus, en proposant un mécanisme de pré-emption des ressources radio, multicritères dans sa manière de choisir comment vont être pré-emptées les ressources et combien, permettant ainsi à l'opérateur du réseau de définir une stratégie de partage et d'allocation des ressources du réseau d'accès plus flexible.

Avec cet objectif en vue, l'invention a pour objet un procédé de gestion des ressources radio dans un réseau de communication mobile, lesdites ressources étant allouées à une pluralité de canaux de communication associés chacun à un ensemble de paramètres de qualité de service requise, ledit procédé comprenant, à l'admission d'une nouvelle demande de canal de communication associé à un ensemble de paramètres de qualité de service requis et suite à la détection d'un manque de ressources nécessaires pour supporter ladite nouvelle demande, la mise en oeuvre d'une procédure de préemption des ressources visant à moduler l'allocation des ressources aux canaux de communication déjà actifs en fonction d'un niveau de priorité associé à chacun d'eux, permettant d'établir une relation d'ordre entre les différents canaux de communication, **caractérisé en ce que** ladite procédure de préemption comprend les étapes suivantes consistant à :
a-identifier les canaux de communication actifs sur le réseau susceptibles d'être préemptés et, parmi ceux-ci, sélectionner le canal de communication le moins prioritaire selon des critères de sélection prédéfmis,
b-évaluer le gain en ressources radio obtenu selon une reconfiguration au moins partielle du canal de communication sélectionné, ledit canal de communication sélectionné et ledit gain associé étant mémorisés dans une liste de reconfiguration,
c-vérifier si le gain fourni par tous les canaux de communication inclus dans la liste est suffisant pour supporter ladite nouvelle demande,
d-répéter les étapes a à c :
   - jusqu'à ce que le gain obtenu soit suffisant, auquel cas les canaux de communication inclus dans la liste sont reconfigurés et la nouvelle demande est acceptée, ou
   - jusqu'à ce que tous les canaux de communication susceptibles d'être préemptés aient été évalués sans obtenir un gain suffisant, auquel cas la nouvelle demande est refusée.

De préférence, l'étape d'identification des canaux de communication susceptibles d'être préemptés, consiste à déterminer les services supports dont le niveau de priorité associé est plus faible que le niveau de priorité associé à la nouvelle demande.

Avantageusement, les canaux de communication susceptibles d'être préemptés vérifient en outre la condition selon laquelle la qualité de service décrite à partir d'au moins un paramètre de qualité de service associé est supérieure à une qualité de service minimum prédéterminée.

De préférence, la qualité de service minimum correspond à une valeur minimale de débit binaire, les canaux de communication susceptibles d'être préemptés vérifiant la condition selon laquelle un paramètre de qualité de service de débit associé comprend une valeur supérieure à ladite valeur minimale de débit prédéfini.

Selon un mode de réalisation, la reconfiguration d'un canal de communication sélectionné consiste à préempter l'intégralité des ressources allouées audit canal de communication.

Selon un autre mode de réalisation, la reconfiguration d'un canal de communication sélectionné consiste à préempter une partie des ressources allouées audit canal de telle sorte que la qualité de service décrite à partir d'au moins le paramètre de qualité de service associé atteigne la qualité de service minimum prédéterminée.

Avantageusement, le canal de communication sélectionné est mémorisé dans la liste de reconfiguration après vérification que le gain obtenu par sa reconfiguration est supérieur ou égal à un seuil de reconfiguration paramétrable.

De préférence, la sélection du canal de communication le moins prioritaire parmi les canaux de communication susceptibles d'être préemptés est effectuée en tenant compte d'au moins le niveau de priorité et d'un paramètre de qualité de service de débit associés à chacun desdits canaux de communication.

Avantageusement, la sélection du canal de communication le moins prioritaire parmi les canaux de communication susceptibles d'être préemptés est effectuée en tenant compte en outre d'au moins un paramètre de qualité de service lié au type de service associé à chacun desdits canaux de communication.

Selon un mode de réalisation, le niveau de priorité associé à un canal de communication, est défini par la valeur du paramètre « Priority Level », déterminée en prenant en compte d'une part la valeur du paramètre de qualité de service « Allocation Retention priority » et, d'autre part, la valeur d'au moins un paramètre de qualité de service lié au type de service.

De préférence, les paramètres de qualité de service liés au type de service utilisés pour la détermination de la valeur du paramètre « Priority level » définissant le niveau de priorité pour le canal de communication correspondant, comprennent le paramètre « Traffic Class ».

De préférence, les paramètres de qualité de service liés au type de service utilisés pour la détermination de la valeur affectée du paramètre « Priority level » définissant le niveau de priorité pour le canal de communication correspondant, comprennent en outre le paramètre « Traffic handling Priority » permettant de prioriser les services de type interactif les uns par rapport aux autres.

L'invention concerne également un dispositif de gestion des ressources radio dans un réseau de communication mobile, comprenant des moyens d'allocation des ressources à une pluralité de canaux de communication associés chacun à un ensemble de paramètres de qualité de service, **caractérisé en ce qu**'il comprend des moyens pour la mise en oeuvre du procédé selon l'invention.

L'invention concerne aussi un programme d'ordinateur stocké sur un support de données, **caractérisé en ce qu**'il comprend des instructions logicielles pour commander l'exécution du procédé selon l'invention.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 décrit l'architecture d'un réseau de type UMTS et a déjà été décrite ;
- la figure 2 décrit la procédure d'activation d'un contexte PDP pour le domaine paquet et a déjà été décrite, et
- la figure 3 est un organigramme illustrant un mode de réalisation particulier pour la mise en oeuvre du procédé selon l'invention.

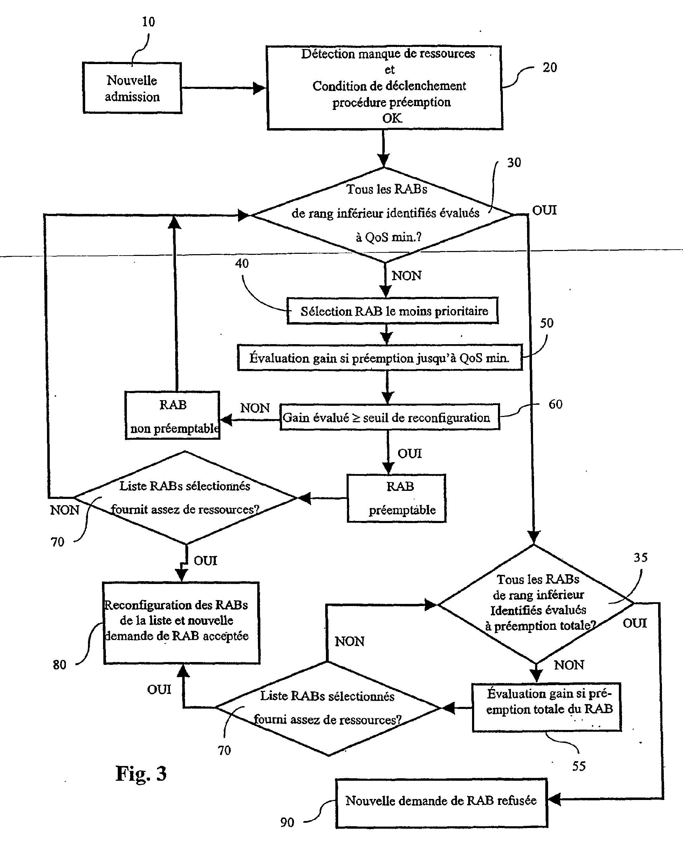

La figure 3 décrit donc un mode de réalisation particulier de mise en oeuvre de la procédure de préemption pour la gestion de l'allocation des ressources radio au niveau de l'UTRAN.

Ainsi, à l'admission, référencée en 10 sur la figure 3, d'une nouvelle demande de service sur le réseau UMTS, le réseau coeur envoie une demande d'allocation de ressources radio correspondante vers l'UTRAN, sous forme d'un ensemble de paramètres de qualité de service. L'UTRAN, et en particulier le dispositif de gestion des ressources radio RNC, effectue un contrôle d'admission en calculant les ressources nécessaires pour le canal de communication destiné au support de cette demande de service. Si le contrôle d'admission localisé dans l'UTRAN détecte, à l'étape 20, un manque de ressources gérées par le réseau d'accès pour supporter cette demande de service, la procédure de préemption peut être mise en oeuvre. Les ressources demandées peuvent être partiellement ou totalement indisponibles.

La détection du manque de ressources est, par exemple, basée sur une détection du manque de puissance dans le sens descendant. Le manque de ressources pourrait également être caractérisé par un manque de code, ou encore un manque de capacité de traitement. La caractérisation d'un manque de ressources sera de toute façon dépendante de l'architecture du réseau et du constructeur des équipements.

Pour la mise en oeuvre de la procédure de préemption, on peut utiliser le paramètre "Pre-emption Capability", dont la valeur indique si le canal de communication associé est susceptible de pré-empter les ressources d'autres canaux de communication déjà actifs, ainsi que le paramètre "Pre-emption Vulnerability", dont la valeur indique si le canal de communication associé peut voir ses ressources préemptées par d'autres canaux de communication.

Ainsi, à titre d'exemple, pour mettre en oeuvre la procédure de préemption, la valeur du paramètre « Pre-emption Capability » pour un canal pour lequel l'admission pose des problèmes de ressources, devrait indiquer que le canal correspondant peut préempter d'autres canaux de communication. La procédure de préemption peut alors être déclenchée, permettant de diminuer l'allocation des ressources radio aux canaux de communication déjà actifs en fonction de leur priorité, pour pouvoir éventuellement accepter la nouvelle demande de canal.

Pour ce faire, une étape 30 d'identification des canaux de communication actifs sur le réseau susceptibles d'être préemptés est mise en oeuvre. Selon l'exemple, cette étape d'identification peut consister à déterminer les canaux de communication actifs dont, d'une part, le paramètre « Pre-emption Vulnarability » associé indique une vulnérabilité à la préemption et, d'autre part, le niveau de priorité associé est plus faible que le niveau de priorité associé au canal pour lequel l'admission pose des problèmes de ressources.

Il convient cependant de noter que l'utilisation des paramètres « Pre-emption ,Capability » et « Pre-emption Vulnerability » est optionnel pour mettre en oeuvre le procédé.

Le niveau de priorité associé à chaque demande de canal auquel il est fait référence ici, permettant d'établir une relation d'ordre entre les différents canaux de communication, peut par exemple être définie par la valeur d'au moins un paramètre de qualité de service lié au type de service, à savoir les paramètres « Traffic Class » et « Traffic Handling Priority », ou encore par le valeur du paramètre standard « Priority Level ».

Dans une variante, le paramètre « Priority Level » du paramètre « Allocation Retention Priority », utilisé pour définir le niveau de priorité pour chaque canal de communication, pourrait voir sa valeur déterminée en prenant en compte d'une part, la valeur du paramètre « Allocation Retention Priority » du réseau coeur et, d'autre part, la valeur d'au moins un paramètre lié au type de service. Les paramètres de qualité de service liés au type de service utilisés pour la détermination de la valeur affectée au sous-paramètre « Priority Level » pour la définition du niveau de priorité associé à chaque canal de communication, comprennent, dans un premier mode de réalisation, le paramètre « Traffic Class », susceptible de prendre quatre valeurs. Dans un second mode de réalisation, les paramètres de qualité de service liés au type de service utilisés comprennent en outre le paramètre « Traffic Handling Priority », susceptible de prendre trois valeurs et qui permet de prioriser, soit d'ordonner par niveau de priorité, les services de type interactif (c'est-à-dire ceux pour lesquels le paramètre « Traffic Class » prend la valeur « Interactive »).

De cette façon, en utilisant le paramètre de qualité de service « Traffic Class » et le paramètre de qualité de service « Allocation Retention Priority » du réseau coeur, il est possible de définir jusqu'à douze valeurs pour le paramètre « Priority level » entre les différents canaux de communication et donc, jusqu'à douze niveaux de priorité.

De plus, en utilisant le paramètre « Traffic Class », le paramètre « Allocation Retention Priority » du réseau coeur et le paramètre « Traffic Handling Priority », on peut définir jusqu'à dix-huit valeurs pour le paramètre « Priority level » entre les différents canaux de communication et donc, jusqu'à dix-huit niveaux de priorité.

Selon un mode de réalisation préféré, la procédure de préemption mise en oeuvre selon l'invention permettra de garantir que l'abonné, auquel les ressources sont préemptées, conservera une qualité de service minimum. Cette qualité de service minimum est définie à partir de paramètres connus de l'UTRAN et propres à une demande de canal de communication donnée, comprenant toute ou une partie du profil de qualité de service.

Aussi, selon ce mode de réalisation préféré, pour l'identification 30 des canaux de communication actifs sur le réseau susceptibles d'être préemptés, ceux-ci doivent en outre vérifier que la qualité de service décrite à partir d'au moins un paramètre de qualité de service associé est supérieure à la qualité de service minimum requise. Ainsi, la définition de la qualité de service minimum peut permettre à l'opérateur de privilégier certains paramètres de qualité de service par rapport à d'autres.

Selon un exemple, la qualité de service minimum correspond à une valeur minimale de débit binaire sur le lien descendant. La qualité de service associée à un canal de communication donné s'entend donc en termes de débit binaire sur le lien descendant alloué et est comparé à un débit minimum sur le lien descendant. Pour ce faire, on utilise le paramètre « Maximum Bit Rate For Downlink » demandé à l'établissement de la connexion. Les canaux de communication actifs susceptibles d'être préemptés doivent donc vérifier que la valeur de leur paramètre de qualité de service associé« Maximum Bit Rate For Downlink » est supérieure à la valeur de qualité de service requise.

La valeur de qualité de service requise pourrait également être décrite en utilisant les paramètres de qualité de service de débit suivants « Maximum Bit Rate For Uplink », « Guaranteed Bit Rate For Downlink », ou encore « Guaranteed Bit Rate For Uplink ».

Dans le cas où au moins un canal de communication susceptible d'être préempté a été identifié à l'étape 30, une étape 40 est mise en oeuvre consistant à sélectionner, parmi les canaux de communication identifiés comme préemptables, le canal de communication le moins prioritaire selon des critères de sélection prédéfinis.

Par exemple, on sélectionne tout d'abord les canaux de communication dans l'ordre décroissant de la valeur du paramètre « Priority Level » standard. A l'intérieur des sous-groupes constitués par les canaux de communication ayant un même niveau de priorité, on sélectionne d'abord les canaux de communication dont la classe de trafic est de type « Background », puis ceux dont la classe de trafic est de type « Interactive ».

Selon la variante évoquée plus haut, où lé paramètre « Priority Level » utilisé pour définir le niveau de priorité pour chaque canal de communication, est déterminée en prenant en compte d'une part, la valeur du paramètre « Allocation Retention Priority » envoyé par le réseau coeur et, d'autre part, la valeur d'au moins un paramètre de qualité de service lié au type de service, la sélection du canal de communication le moins prioritaire parmi ceux identifiés comme préemptables, consiste simplement à sélectionner les canaux de communication dans l'ordre décroissant de la valeur du paramètre « Priority Level ».

Puis, à l'intérieur des sous-groupes formés par les canaux de communication ayant un même niveau de priorité, on sélectionne par exemple les canaux de communication dans l'ordre croissant du rapport débit binaire sur le lien descendant alloué sur débit binaire minimum prédéterminé pour la garantie d'une qualité de service minimum.

Une fois le canal de communication le moins prioritaire sélectionné parmi les canaux de communication identifiés comme préemptables, une étape d'évaluation 50 du gain en ressources obtenu en cas de reconfiguration de ce canal de communication est mise en oeuvre, consistant à estimer le gain obtenu si les ressources allouées à ce canal de communication sont préemptées jusqu'à atteindre la qualité de service minimum prédéterminée, à savoir, selon l'exemple, le débit binaire minimum sur le lien descendant fixé.

Le gain en ressources obtenu est de préférence comparé, dans une étape 60, à un seuil de reconfiguration paramétrable. On peut en effet définir un seuil paramétrable en dessous duquel on considère que le gain obtenu n'est pas suffisant. La préemption des ressources sur ce canal de communication n'est alors pas mise en oeuvre. La définition d'un tel seuil a pour but de limiter le nombre de reconfigurations de canaux de communication.

Dans un exemple de réalisation, si le gain en ressources obtenu, caractérisé par exemple par un gain sur la puissance totale dans le sens descendant, est inférieur à un seuil paramétrable de 10% de la puissance nécessaire pour admettre le nouveau canal de communication correspondant à la nouvelle demande de service, le canal de communication sélectionné sera considéré comme non préemptable et la procédure reprend à l'étape 30. Dans le cas contraire, le canal de communication sélectionné sera considéré comme préemptable et sera inclus avec le gain évalué associé à ce canal de communication dans une liste de reconfiguration comprenant les canaux de communication à reconfigurer.

Une étape 70 consiste alors à vérifier si le gain fourni par tous les canaux de communication inclus dans la liste de reconfiguration pour préemption dégage suffisamment de ressources pour servir la demande de ressources pour le canal de communication demandé.

Les étapes 30 à 70 se répètent jusqu'à ce que le gain obtenu soit suffisant, auquel cas une étape 80 est mise en oeuvre, dans laquelle les canaux de communication inclus dans la liste de reconfiguration sont reconfigurés de manière à récupérer effectivement les ressources nécessaires pour accepter le nouveau canal de communication, et la procédure se termine.

Un autre cas de figure peut se présenter, où les étapes 30 à 70 sont répétées, jusqu'à ce que tous les canaux de communication identifiés susceptibles d'être préemptés aient été évalués en termes de gain de ressources à la QoS minimum, sans toutefois obtenir le gain en ressources nécessaire.

Dans ce cas de figure où le gain obtenu en reconfigurant tous les canaux de communication de rang inférieur à la qualité de service minimum n'est pas suffisant, la procédure prévoit le fait de préempter l'intégralité des ressources des canaux de communication susceptibles d'être préemptés.

Ainsi, lorsque tous les canaux de communication de rang inférieur identifiés ont été évalués à la qualité de service minimum sans obtenir un gain suffisant, une étape 35 est mise en oeuvre, consistant alors à identifier tous les canaux de communication susceptibles d'être préemptés sans condition de respect d'une qualité de service minimum. Sont donc pris en compte les canaux de communication dont d'une part, le paramètre RAB « Pre-emption Vulnarability » associé indique une vulnérabilité à la préemption et, d'autre part, le niveau de priorité associé est plus faible que le niveau de priorité associé à la nouvelle demande de canal.

La même boucle qu'expliqué précédemment en référence aux étapes 30 à 70 est à nouveau mise en oeuvre sur les canaux de communication identifiés comme préemptables à l'étape 35, sauf que l'étape 50 est remplacée par une étape 55 consistant, pour un canal de communication sélectionné, à estimer le gain en ressource obtenu si la préemption des ressources allouées à ce canal de communication était totale. De la même façon, la procédure boucle jusqu'à ce que le gain fourni par tous les canaux de communication inclus dans la liste de reconfiguration soit suffisant.

Toutefois, si même dans cette deuxième boucle, tous les canaux de communication identifiés susceptibles d'être préemptés sont évalués à préemption totale sans obtenir malgré tout un gain suffisant pour supporter la nouvelle demande de service, celle-ci sera refusée comme indiqué à l'étape 90, et la procédure se termine.

La procédure de préemption pourrait également être mise en oeuvre sur la base de canaux de communication identifiés comme susceptibles d'être préemptés, évalués directement à préemption totale sans qu'il y ait une première phase avec une qualité de service minimum à respecter.

L'UTRAN doit comprendre, au niveau des dispositifs de gestion de ressources radio RNC, des moyens de traitement de données agencés de manière à réaliser les différentes étapes du procédé de l'invention. Les étapes du procédé précédemment décrits sont plus précisément exécutées par un dispositif informatique, en l'espèce le dispositif de gestion des ressources radio, sous la commande d'instructions logicielles. Par conséquent, l'invention concerne également un programme d'ordinateur destiné à être stocké dans ou transmis par un support de données comprenant des instructions logicielles pour commander l'exécution du procédé par un dispositif informatique. Le support de données peut être un support matériel de stockage, par exemple un CD-ROM, une disquette magnétique ou un disque dur, ou bien un support transmissible tel qu'un signal électrique, optique ou radio.

Le mode de réalisation décrit concerne le réseau UMTS. Bien entendu, l'invention s'applique au réseau GPRS ainsi qu'à tout type de réseau de communication mobile de ce type.

### GLOSSAIRE

Ce glossaire présente la liste des acronymes anglo-saxons utilisés dans la présente demande de brevet. La plupart de ces acronymes sont définis dans le cadre de la norme de télécommunication 3GPP.
- 3GPP: Third-Generation Partnership project (of ETSI)
- GSM: Global System for Mobile Communication
- UMTS: Universal Mobile Telecommunication System
- IP: Internet protocol
- BSC: Base Station Controller
- HLR: Home Location Register
- SGSN: Serving GPRS Support Node
- GGSN: Gateway GPRS Support Node
- UTRAN: UMTS Terrestrial Radio Access Network
- RNC: Radio Network Controller
- QoS: Quality of Service
- FTP: File Transfert Protocol
- ARP: Allocation Retention Priority
- PDP: Packet Data Protocol
- THP: Traffic Handling Priority
- RAB: Radio Access Bearer

## Revendications

1. Procédé de gestion des ressources radio dans un réseau de communication mobile, lesdites ressources étant allouées à une pluralité de canaux de communication associés chacun à un ensemble de paramètres de qualité de service requise, ledit procédé comprenant, à l'admission (10) d'une nouvelle demande de canal de communication associé à un ensemble de paramètres de qualité de service requis et suite à la détection (20) d'un manque de ressources nécessaires pour supporter ladite nouvelle demande, la mise en oeuvre d'une procédure de préemption des ressources visant à moduler l'allocation des ressources aux canaux de communication déjà actifs en fonction d'un niveau de priorité associé à chacun d'eux, permettant d'établir une relation d'ordre entre les différents canaux de communication, **caractérisé en ce que** ladite procédure de préemption comprend les étapes suivantes consistant à :
a-identifier (30,35) les canaux de communication actifs sur le réseau susceptibles d'être préemptés et, parmi ceux-ci, sélectionner (40) le canal de communication le moins prioritaire selon des critères de sélection prédéfinis,
b-évaluer (50,55) le gain en ressources radio obtenu selon une reconfiguration au moins partielle du canal de communication sélectionné, ledit canal de communication sélectionné et ledit gain associé étant mémorisés dans une liste de reconfiguration,
c-vérifier (70) si le gain fourni par tous les canaux de communication inclus dans la liste est suffisant pour supporter ladite nouvelle demande,
d-répéter les étapes a à c :
- jusqu'à ce que le gain obtenu soit suffisant, auquel cas les canaux de communication inclus dans la liste sont reconfigurés et la nouvelle demande est acceptée (80), ou
- jusqu'à ce que tous les canaux de communication susceptibles d'être préemptés aient été évalués sans obtenir un gain suffisant, auquel cas la nouvelle demande est refusée (90).

2. Procédé selon la revendication 1, **caractérisé en ce que** l'étape d'identification des canaux de communication susceptibles d'être préemptés, consiste à déterminer les services supports dont le niveau de priorité associé est plus faible que le niveau de priorité associé à la nouvelle demande.

3. Procédé selon la revendication 2, **caractérisé en ce que** les canaux de communication susceptibles d'être préemptés vérifient en outre la condition selon laquelle la qualité de service décrite à partir d'au moins un paramètre de qualité de service associé est supérieure à une qualité de service minimum prédéterminée.

4. Procédé selon la revendication 3, **caractérisé en ce que** la qualité de service minimum correspond à une valeur minimale de débit binaire, les canaux de communication susceptibles d'être préemptés vérifiant la condition selon laquelle un paramètre de qualité de service de débit associé comprend une valeur supérieure à ladite valeur minimale de débit prédéfini.

5. Procédé selon les revendications 1 ou 2, **caractérisé en ce que** la reconfiguration d'un canal de communication sélectionné consiste à préempter l'intégralité des ressources allouées audit canal de communication.

6. Procédé selon la revendication 3 ou 4, **caractérisé en ce que** la reconfiguration d'un canal de communication sélectionné consiste à préempter une partie des ressources allouées audit canal de telle sorte que la qualité de service décrite à partir d'au moins le paramètre de qualité de service associé atteigne la qualité de service minimum prédéterminée.

7. Procédé selon l'une quelconque des revendications précédentes, **caractérisé en ce que** le canal de communication sélectionné est mémorisé dans la liste de reconfiguration après vérification (60) que le gain obtenu par sa reconfiguration est supérieur ou égal à un seuil de reconfiguration paramétrable.

8. Procédé selon l'une quelconque des revendications précédentes, **caractérisé en ce que** la sélection du canal de communication le moins prioritaire parmi les canaux de communication susceptibles d'être préemptés est effectuée en tenant compte d'au moins le niveau de priorité et d'un paramètre de qualité de service de débit associés à chacun desdits canaux de communication.

9. Procédé selon la revendication 8, **caractérisé en ce que** la sélection du canal de communication le moins prioritaire parmi les canaux de communication susceptibles d'être préemptés est effectuée en tenant compte en outre d'au moins un paramètre de qualité de service lié au type de service associé à chacun desdits canaux de communication.

10. Procédé selon l'une quelconque des revendications précédentes, **caractérisé en ce que** le niveau de priorité associé à un canal de communication, est défini par la valeur du paramètre « Priority Level », déterminée en prenant en compte d'une part la valeur du paramètre de qualité de service « Allocation Retention priority » et, d'autre part, la valeur d'au moins un paramètre de qualité de service lié au type de service.

11. Procédé selon la revendication 10, **caractérisé en ce que** les paramètres de qualité de service liés au type de service utilisés pour la détermination de la valeur du paramètre « Priority level » définissant le niveau de priorité pour le canal de communication correspondant, comprennent le paramètre « Traffic Class ».

12. Procédé selon la revendication 11, **caractérisé en ce que** les paramètres de qualité de service liés au type de service utilisés pour la détermination de la valeur affectée du paramètre « Priority level » définissant le niveau de priorité pour le canal de communication correspondant, comprennent en outre le paramètre « Traffic handling Priority » permettant de prioriser les services de type interactif les uns par rapport aux autres.

13. Dispositif de gestion des ressources radio dans un réseau de communication mobile, comprenant des moyens d'allocation des ressources à une pluralité de canaux de communication associés chacun à un ensemble de paramètres de qualité de service, **caractérisé en ce qu'**il comprend des moyens pour la mise en oeuvre du procédé selon l'une quelconque des revendications 1 à 12.

14. Programme d'ordinateur stocké sur un support de données, **caractérisé en ce qu'**il comprend des instructions logicielles pour exécuter chacune des étapes du procédé selon l'une quelconque des revendications 1 à 12.

## Claims

1. Method for managing radio resources in a mobile communications network, said resources being allocated to a plurality of communications channels, each associated with a set of quality parameters for the required service, said method comprising, on admission (10) of a new request for a communications channel associated with a set of required service quality parameters and following the detection (20) of a lack of resources necessary to support said new request, the implementation of a method of pre-empting resources aiming to adjust the allocation of resources to already active communications channels depending on the priority level associated with each of them, enabling an order relation to be established between the various communications channels, **characterized in that** said pre-emption method comprises the following steps consisting in:
a - identifying (30, 35) the active communications channels on the network capable of being pre-empted and, among these, selecting (40) the lowest priority communications channel according to the predefined selection criteria;
b - evaluating (50, 55) the gain in radio resources obtained according to an at least partial reconfiguration of the selected communications channel, said selected communications channel and said associated gain being stored in a reconfiguration list;
c - checking (70) whether the gain provided by all the communications channels included in the list is sufficient to support said new request;
d - repeating steps a to c;
- until the gain obtained is sufficient, in which case the communications channels included in the list are reconfigured and the new request is accepted (80); or
- until all the communications channels liable to be pre-empted have been evaluated without obtaining a sufficient gain, in which case the new request is refused (90).

2. Method according to Claim 1, **characterized in that** the step of identifying communications channels capable of being pre-empted consists in determining the support services for which the associated priority level is lower than the priority level associated with the new request.

3. Method according to Claim 2, **characterized in that** the communications channels likely to be pre-empted additionally meet the condition according to which the service quality described in terms of at least one associated service quality parameter is higher than a predetermined minimum service quality.

4. Method according to Claim 3, **characterized in that** the minimum service quality corresponds to a minimum bit-rate value, the communications channels likely to be pre-empted meeting the condition according to which an associated bit-rate service quality parameter comprises a value greater than said predefined minimum bit-rate value.

5. Method according to Claim 1 or 2, **characterized in that** the reconfiguration of a selected communications channel consists in pre-empting all the resources allocated to said communications channel.

6. Method according to Claim 3 or 4, **characterized in that** the reconfiguration of a selected communications channel consists in pre-empting part of the resources allocated to said channel so that the service quality described in terms of at the least one associated service quality parameter attains the predetermined minimum service quality.

7. Method according to any one of the preceding claims, **characterized in that** the selected communications channel is stored in the reconfiguration list after checking (60) that the gain obtained through its reconfiguration is greater than or equal to a reconfiguration threshold that can be parameterized.

8. Method according to any one of the preceding claims, **characterized in that** the selection of the lowest priority communications channel among the communications channels likely to be pre-empted is carried out by taking account of at least the priority level and of a bit-rate service quality parameter associated with each of said communications channels.

9. Method according to Claim 8, **characterized in that** the selection of the lowest priority communications channel among the communications channels likely to be pre-empted is carried out by taking account, in addition, of at least one service quality parameter linked with the service type associated with each of said communications channels.

10. Method according to any one of the preceding claims, **characterized in that** the priority level associated with a communications channel is defined by the 'Priority Level' parameter value, determined by taking account of the value of the 'Allocation Retention Priority' service quality parameter on the one hand, and of the value of at least one service quality parameter linked with the service type on the other hand.

11. Method according to Claim 10, **characterized in that** the service quality parameters linked with the service type and used to determine the value of the 'Priority Level' parameter, defining the priority level for the corresponding communications channel, include the 'Traffic Class' parameter.

12. Method according to Claim 11, **characterized in that** the service quality parameters linked with the service type and used to determine the allocated value of the 'Priority Level' parameter, defining the priority level for the corresponding communications channel, furthermore include the 'Traffic Handling Priority' parameter, allowing services of the interactive type to be prioritized in relation to each other.

13. Device for managing radio resources in a mobile communications network, comprising means for allocating resources to a plurality of communications channels, each associated with a set of service quality parameters, **characterized in that** it comprises means for implementing the method according to any one of Claims 1 to 12.

14. Computer program stored on a data medium, **characterized in that** it comprises software instructions for executing each of the steps of the method according to any one of Claims 1 to 12.

## Patentansprüche

1. Verfahren zur Verwaltung der Funkressourcen in einem Mobilkommunikationsnetz, wobei die Ressourcen mehreren Kommunikationskanälen zugeteilt sind, die je einer Gruppe von erforderlichen Dienstqualitätsparametern zugeordnet sind, wobei das Verfahren bei der Zulassung (10) einer neuen Anforderung eines Kommunikationskanals, der einer Gruppe von erforderlichen Dienstqualitätsparametern zugeordnet ist, und nach der Erfassung (20) eines Mangels notwendiger Ressourcen zur Unterstützung der neuen Anforderung die Anwendung einer Bevorrechtigungsprozedur der Ressourcen aufweist, die darauf abzielt, die Zuteilung der Ressourcen zu den bereits aktiven Kommunikationskanälen in Abhängigkeit von einem jedem von ihnen zugeordneten Prioritätspegel zu modulieren, was es ermöglicht, eine Ordnungsbeziehung zwischen den verschiedenen Kommunikationskanälen herzustellen, **dadurch gekennzeichnet, dass** die Bevorrechtigungsprozedur die folgenden Schritte aufweist, die darin bestehen:
a- die im Netzwerk aktiven Kommunikationskanäle, die bevorrechtigt werden können, zu identifizieren (30, 35) und unter diesen den Kommunikationskanal auszuwählen (40), der gemäß vordefinierten Auswahlkriterien am wenigsten prioritär ist,
b- den gemäß einer zumindest teilweisen Rekonfiguration des ausgewählten Kommunikationskanals erhaltenen Gewinn an Funkressourcen auszuwerten (50, 55), wobei der ausgewählte Kommunikationskanal und der zugeordnete Gewinn in einer Rekonfigurationsliste gespeichert werden,
c- zu überprüfen (70), ob der von allen in der Liste enthaltenen Kommunikationskanälen gelieferte Gewinn ausreichend ist, um die neue Anforderung zu unterstützen,
d- die Schritte a bis c zu wiederholen:
- bis der erhaltene Gewinn ausreichend ist, in welchem Fall die in der Liste enthaltenen Kommunikationskanäle rekonfiguriert werden und die neue Anforderung akzeptiert wird (80), oder
- bis alle Kommunikationskanäle, die bevorrechtigt werden können, ausgewertet wurden, ohne einen ausreichenden Gewinn zu erhalten, in welchem Fall die neue Anforderung zurückgewiesen wird (90).

2. Verfahren nach Anspruch 1, **dadurch gekennzeichnet, dass** der Schritt der Identifizierung der Kommunikationskanäle, die bevorrechtigt werden können, darin besteht, die Trägerdienste zu bestimmen, deren zugeordneter Prioritätspegel niedriger ist als der der neuen Anforderung zugeordnete Prioritätspegel.

3. Verfahren nach Anspruch 2, **dadurch gekennzeichnet, dass** die Kommunikationskanäle, die bevorrechtigt werden können, außerdem die Bedingung erfüllen, gemäß der die ausgehend von mindestens einem zugeordneten Dienstqualitätsparameter beschriebene Dienstqualität höher ist als eine vorbestimmte Mindestdienstqualität.

4. Verfahren nach Anspruch 3, **dadurch gekennzeichnet, dass** die Mindestdienstqualität einem Mindestbitratenwert entspricht, wobei die Kommunikationskanäle, die bevorrechtigt werden können, die Bedingung erfüllen, gemäß der ein zugeordneter Bitraten-Dienstqualitätsparameter einen Wert enthält, der höher ist als der vordefinierte Mindestbitratenwert.

5. Verfahren nach den Ansprüchen 1 oder 2, **dadurch gekennzeichnet, dass** die Rekonfiguration eines ausgewählten Kommunikationskanals darin besteht, die Gesamtheit der dem Kommunikationskanal zugeteilten Ressourcen zu bevorrechtigen.

6. Verfahren nach Anspruch 3 oder 4, **dadurch gekennzeichnet, dass** die Rekonfiguration eines ausgewählten Kommunikationskanals darin besteht, einen Teil der dem Kanal zugeteilten Ressourcen zu bevorrechtigen, so dass die ausgehend von mindestens einem zugeordneten Dienstqualitätsparameter beschriebene Dienstqualität die vorbestimmte Mindestdienstqualität erreicht.

7. Verfahren nach einem der vorhergehenden Ansprüche, **dadurch gekennzeichnet, dass** der ausgewählte Kommunikationskanal in der Rekonfigurationsliste nach der Überprüfung (60), ob der durch seine Rekonfiguration erhaltene Gewinn höher als oder gleich einer parametrierbaren Rekonfigurationsschwelle ist, gespeichert wird.

8. Verfahren nach einem der vorhergehenden Ansprüche, **dadurch gekennzeichnet, dass** die Auswahl des am wenigsten prioritären Kommunikationskanals unter den Kommunikationskanälen, die bevorrechtigt werden können, unter Berücksichtigung mindestens des Prioritätspegels und eines Bitraten-Dienstqualitätsparameters durchgeführt wird, die jedem der Kommunikationskanäle zugeordnet sind.

9. Verfahren nach Anspruch 8, **dadurch gekennzeichnet, dass** die Auswahl des am wenigsten prioritären Kommunikationskanals unter den Kommunikationskanälen, die bevorrechtigt werden können, unter weiterer Berücksichtigung mindestens eines Dienstqualitätsparameters durchgeführt wird, der mit dem jedem der Kommunikationskanäle zugeordneten Diensttyp verbunden ist.

10. Verfahren nach einem der vorhergehenden Ansprüche, **dadurch gekennzeichnet, dass** der einem Kommunikationskanal zugeordnete Prioritätspegel durch den Wert des Parameters "Priority Level" definiert wird, der unter Berücksichtigung einerseits des Werts des Dienstqualitätsparameters "Allocation Retention priority" und anderseits des Werts mindestens eines Dienstqualitätsparameters bestimmt wird, der mit dem Diensttyp verbunden ist.

11. Verfahren nach Anspruch 10, **dadurch gekennzeichnet, dass** die mit dem Diensttyp verbundenen Dienstqualitätsparameter, die zur Bestimmung des Werts des Parameters "Priority Level" verwendet werden, der den Prioritätspegel für den entsprechenden Kommunikationskanal definiert, den Parameter "Traffic Class" enthalten.

12. Verfahren nach Anspruch 11, **dadurch gekennzeichnet, dass** die mit dem Diensttyp verbundenen Dienstqualitätsparameter, die zur Bestimmung des dem Parameter "Priority level" zugeteilten Werts verwendet werden, der den Prioritätspegel für den entsprechenden Kommunikationskanal definiert, außerdem den Parameter "Traffic handling Priority" enthalten, der es ermöglicht, den Diensten vom zueinander interaktiven Typ Priorität zu verleihen.

13. Vorrichtung zur Verwaltung der Funkressourcen in einem Mobilkommunikationsnetz, die Mittel zur Zuteilung der Ressourcen zu mehreren Kommunikationskanälen aufweist, die je einer Gruppe von Dienstqualitätsparametern zugeordnet sind, **dadurch gekennzeichnet, dass** sie Mittel zur Anwendung des Verfahrens nach einem der Ansprüche 1 bis 12 aufweist.

14. Computerprogramm, das auf einem Datenträger gespeichert ist, **dadurch gekennzeichnet, dass** es Softwareanweisungen enthält, um jeden der Schritte des Verfahrens nach einem der Ansprüche 1 bis 12 auszuführen.
